# EUROPEAN PATENT APPLICATION

(11) **EP 1 398 443 A2**
(43) Date of publication of application: **17.03.2004**
(21) Application number: 03014679.9
(22) Date of filing: 27.06.2003
(51) Int. Cl.: E05F 5/02, F16F 7/00

(54) **Buffer arrangement, in particular for deadening the shocks of a window or door wing closing against an abutment member**

(30) Priority: 13.09.2002 IT PN20020047
(71) Applicant: Ferramenta Livenza S.r.l., 33070 Maron di Brugnera, Pordenone (IT)
(72) Inventor: Ferro, Renato, 33170 Pordenone (IT)
(74) Representative: Giugni, Valter

(57) **Abstract**

A buffer arrangement, in particular for deadening the shocks of a window or door wing closing against a corresponding abutment member, comprising an elastic head (2) which defines a shock-deadening surface that is substantially parallel to the abutment plane, in which said head is inserted in a rigid support shank (3), which is provided with an abutting collar (4) and bosses (5) on the outer surface thereof to enable it to be inserted in a corresponding receptacle provided either in the window or door wing or in the abutment member thereof; the head (2) further defines a plurality of shock-deadening bulges (7) that protrude through corresponding apertures (6) provided in the wall of the shank (3) below the abutting collar (4), to elastically separate the abutting collar (4) from the plane of the window or door wing or the abutment member.

## Description

The present invention refers to a buffer arrangement, in particular for deadening the shocks of a window or door wing closing against a corresponding abutment member.

Largely known in the art are buffer devices that are usually made of plastics and are adapted to be inserted in specially provided receptacles or seats in the window or door wing or in the corresponding abutment member, in which said buffer devices, by protruding from the plane of said window or door wing or said corresponding abutment member, are able to deform elastically, thereby dampening the shock of the window or door wing as it strikes against the corresponding abutment member, especially when it is closed in a rather abrupt or vehement manner, and reducing at the same time also the related bumping noise.

Such devices are usually constituted by a head of soft plastic material, which absorbs and deadens the shock of the window or door wing as it strikes against the corresponding abutment member, and a shank made of a more rigid plastic material that supports the head and enables the device to be inserted in the receptacle intended to hold it.

Usually, this shank is cylindrical and is provided, at an axial end portion thereof, with a collar having a larger diameter for resting against the plane of the window or door wing, or the corresponding abutment member, when the device is positioned in the related receptacle. The shank further includes an array of axial protrusions on the outer surface thereof in view of facilitating the insertion of the device in its own receptacle.

Some of these devices have a moulded solid-body shank with an elastic head that is co-injected above the collar; other devices, on the contrary, are provided with a hollow shank that contains the head, which in turn can be either co-injected or assembled thereto, in the case that the device is made in two distinct pieces.

In all these devices, anyway, the shock deadening effect is solely and only brought about by the head coming elastically into contact with the window or door wing or the corresponding abutment member thereof. As a result, a major drawback that is encountered with all these prior-art buffer devices derives from the fact that they behave in a single and same manner, regardless of the type of shock that they have to dampen.

It therefore is the object of the present invention to provide a buffer device which constitutes an improvement over the generality of the above-cited prior-art devices.

Within this general object, a purpose of the present invention is to provide a buffer device having differentiated shock-deadening characteristics, in such a manner as to prove more effective than the corresponding devices that are currently available on the market.

Another purpose of the present invention is to provide a buffer arrangement that is simple in its construction and reliable in use, and is further capable of being easily manufactured at reasonably low, competitive costs.

A further purpose yet of the present invention is to provide a buffer arrangement which is easy to handle on assembly machines, as well as simple to insert in the related receptacle provided on the window or door wing or in the corresponding abutment member.

According to the present invention, these aims, along with further ones that will be apparent in the following description, are reached in a buffer arrangement incorporating the characteristics as recited in the appended claim 1 and following sub-claims.

Further advantages and features of the present invention will be more readily apparent from the description of a preferred, although not sole embodiment that is given below by way of non-limiting example with reference to the accompanying drawings, in which:

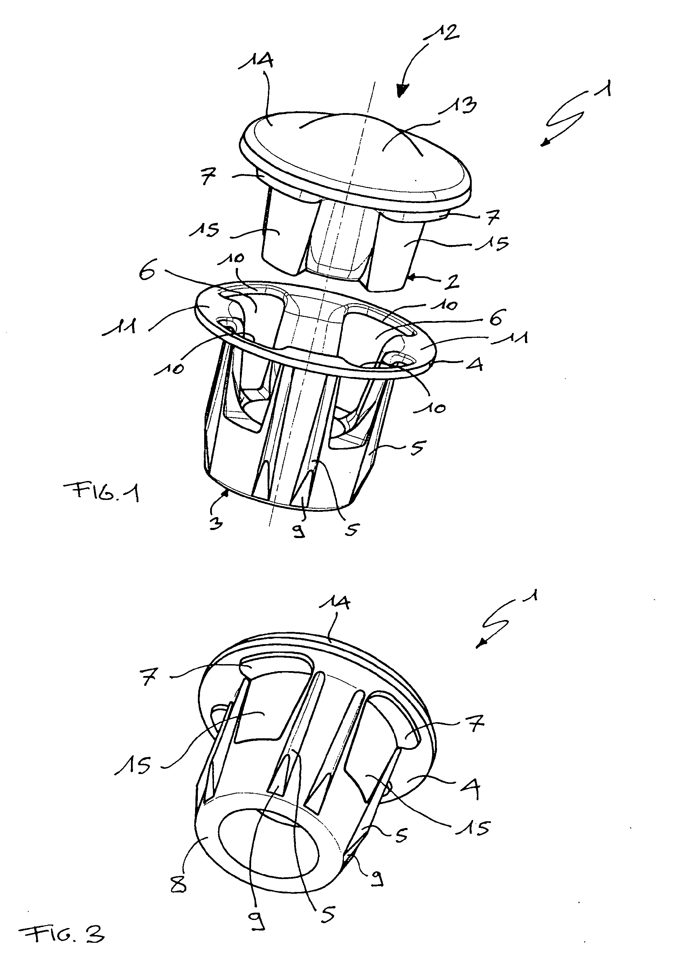

- Figure 1 is a side perspective exploded view of a buffer arrangement according to the present invention;
- Figure 2 is a side elevational view of the buffer arrangement according to the present invention;

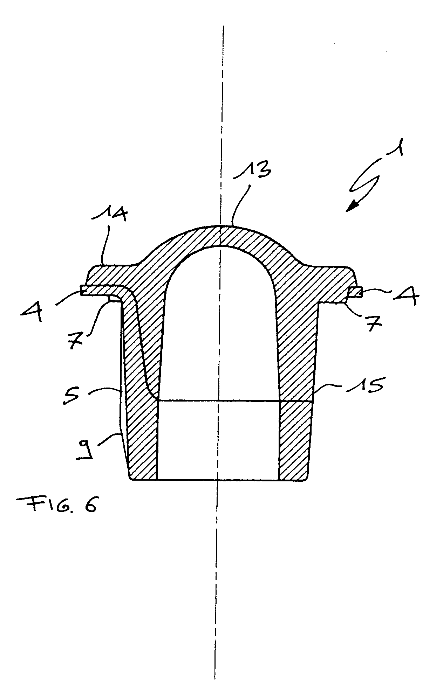

- Figure 3 is a rear perspective view of the buffer arrangement according to the present invention;
- Figure 4 is a bottom plan view of the buffer arrangement according to the present invention;
- Figure 5 is a top plan view of the buffer arrangement according to the present invention, as illustrated with its outer ring removed;

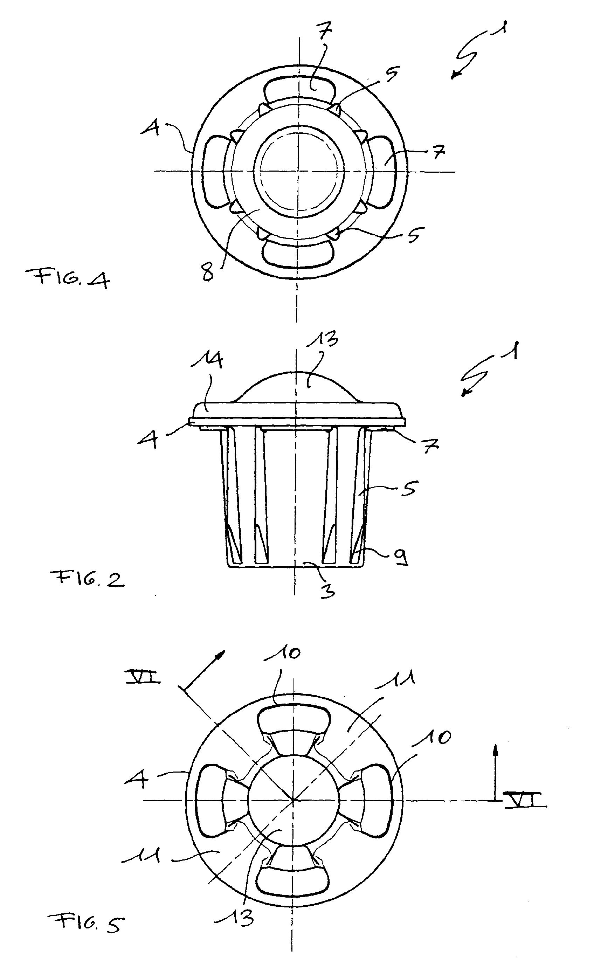

- Figure 2 is a side elevational cross-sectional view, along the line VI-VI of Figure 5, of the buffer arrangement according to the present invention;

With reference to the above-cited Figures, the buffer arrangement, which is generally indicated at 1, comprises an elastic head 2, that is adapted to absorb the shock of a window or door wing as it is closed against a corresponding abutment member, so as to deaden the shock and reduce the noise thereof. This head is contained in a rigid support shank 3, which is provided with an abutting collar 4 and a plurality of bosses 5 on the outer surface thereof, and which enables the buffer arrangement 1 to be inserted in a specially provided seat or receptacle (not shown in the Figures) in the same window or door wing or in the corresponding abutment member thereof.

According to the present invention, the elastic head 2 protrudes from appropriate apertures 6 that are specially provided in the wall of the shank 3, thereby defining bulges 7 that in an advantageous manner elastically separate the abutting ring 4 from the plane of the window or door wing or the corresponding abutment member thereof, as this will be described in greater detail further on.

In the example being considered here, the head 2 and the shank 3 are moulded sequentially in the same mould through the co-injection of two different materials, i.e. a soft rubber material for the head 2 and a rigid plastic material for the shank 3.

The shank 3 is substantially constituted by a hollow cylindrical body which features, at the edge of an axial extremity thereof, an annular contour having a larger diameter, which practically forms the abutting collar 4. The bosses 5 extend axially along the outer surface of the shank 3, thereby defining rectilinear protrusions which, in the proximity of a lower annular edge 8, on the opposite side of the abutting collar 4, are provided with a portion 9, the height of which is gradually lowered so as to favour the insertion of the shank 3 in the appropriate receptacle provided in the window or door wing or the corresponding abutment member thereof. The bosses 5 are provided so as to form a sequence of pairs of bosses, each one of such pairs being formed by two relatively close bosses, and such pairs of bosses being further arranged at an angle of 90 degrees relative to each other.

The apertures 6 are provided in the wall of the shank 3 in correspondence of the section thereof which is comprised between adjacent bosses 5 of subsequent pairs, which therefore are at 90 degrees relative to each other. The apertures 6 extend along the upper portion of the shank 3, where they also reach into the abutting collar 4, in which they define corresponding concavities 10 in the inner contour of the abutting collar 4. In this way, the abutting collar 4 features an alternate sequence of portions 11 having a larger annular surface, arranged at an angle of 90 degrees relative to each other and joined with each other by said concavities 10, as this is best shown in Figure 5.

The head 2, that is moulded onto the shank 3 by co-injection, covers the abutting collar 4 and advantageously extends into expanding through the apertures 6. In particular, the head 2 defines on top a shock-dampening surface 12 constituted by a protruding, internally relieved central cap 13, provided in view of dampening light blows, and a compact outer ring 14 that is substantially supported by the annular surface of the abutting collar 4 and is adapted to absorb more severe shocks.

The outer ring 14 most appropriately has a diameter that is slightly smaller than the diameter of the abutting collar 4, in such a manner that the rigid peripheral edge of the abutting collar 4 is left free in view of facilitating handling of the pieces on assembly machines.

The head 12 further defines the bulges 7 that protrude below the abutting collar 4 through the concavities 10 so as to come or move into contact with the plane of the window or door wing or the corresponding abutment member thereof, as the case may be, thereby separating said window or door wing, or said corresponding abutment member, from the abutting collar 4, when the buffer arrangement 1 is inserted in the appropriate receptacle, so as to contribute to the shock dampening effect when said wing shuts against the corresponding abutment member.

The apertures 6 of the shank 3 are filled, during the injection-moulding process, by elastic vertical extensions 15 of the head 2, which have substantially the same thickness as the wall of said shank 3.

The central cap 13 is that portion of the head 2 which first comes into contact with the window or door wing, or the corresponding abutment member, as the case may be, when said wing is being closed; its purpose is to absorb and dampen light blows, since, owing to the particular configuration of the head 2, it is in fact very elastic. On the contrary, the outer ring 14, which is not as soft as the central cap owing to its resting directly onto the abutting collar 4, enables more severe shocks, such as for instance the ones occurring when the door wing eventually hits the abutment member, to be absorbed and, as a result, dampened; this outer ring practically becomes operative upon said central cap having completed the task for which it has been designed. The shock-absorbing bulges 7, by elastically separating the abutting collar 4, which is made of rigid plastic material, from the plane of the window or door wing, or the corresponding abutment member thereof, have the effect of further increasing the shock-absorbing capacity of the buffer arrangement 1 according to the present invention. Advantageously, in the case that the window or door wing is shut in a rather vehement or abrupt manner, the vertical extensions 15 of the head 2, which are of soft rubber material, elastically and reversibly expand outwardly in the free space that exists, owing to the provision of the bosses 5, between the wall of the rigid shank 3 and the surface of the receptacle in which the buffer device 1 is inserted, thereby contributing to dampening violent shocks.

It has been found in practice that the present invention is fully effective in reaching all of the afore mentioned purposes and aims through the provision of a buffer arrangement that proves particularly effective in absorbing and dampening shocks.

An advantage of the buffer arrangement according to the present invention lies in the fact that it provides an elastic head provided with a shock-absorbing surface featuring a differentiated elasticity pattern to cope with blows and shocks of differing force.

Another advantage of the buffer arrangement according to the present invention lies in the fact that it provides shock-absorbing elements arranged between the rigid shank and the mounting receptacle thereof, these elements contributing to further improving the shock-dampening effect.

Another advantage yet of the buffer arrangement according to the present invention lies in the fact that it provides a device that can be most easily handled and manipulated on assembly machines, without any hindrance or jamming of parts, and is further very simple to be reliably inserted in the specially provided receptacle.

It will of course be appreciated that the afore-described buffer arrangement according to the present invention may be the subject of a number of modifications and variants without departing from the scope of the present invention.

It will be further appreciated that the materials used to manufacture the apparatus of the present invention, as well as the shapes and the sizing of the individual component parts thereof, may each time be selected so as to more appropriately meet the particular requirements or suit the particular application.

## Claims

1. Buffer arrangement, in particular for deadening the shocks of a window or door wing closing against a corresponding abutment member, comprising an elastic head (2) which defines a shock-deadening surface that is substantially parallel to the abutment plane, in which said head is inserted in a rigid support shank (3), which is provided with an abutting collar (4) and bosses (5) on the outer surface thereof to enable it to be inserted in a corresponding receptacle provided either in said window or door wing or in said corresponding abutment member thereof, **characterized in that** the head (2) further defines a plurality of shock-deadening bulges (7) that protrude through corresponding apertures (6) provided in the wall of the shank (3) below said abutting collar (4), to elastically separate said abutting collar (4) from the plane of said window or door wing or said corresponding abutment member.

2. Buffer arrangement according to claim 1, **characterized in that** said shank (3) is substantially constituted by a hollow cylindrical body, said abutting collar (4) featuring an annular contour at the edge of an axial extremity of said shank (3), said bosses (5) comprising axial protrusions having a portion (9) with a gradually lowering height in correspondence of a lower annular edge (8) of said shank (3), as to favour the insertion of said shank (3) in the appropriate receptacle provided in the window or door wing or the corresponding abutment member thereof, said bosses (5) being provided so as to form a sequence of pairs of bosses arranged at an angle of 90 degrees relative to each other, each one of such pairs being formed by two relatively close ones of said bosses (5).

3. Buffer arrangement according to claim 1 or 2, **characterized in that** said apertures (6) are provided in the wall of said shank (3) in correspondence of the section thereof which is comprised between adjacent bosses (5) of said subsequent pairs arranged at 90 degrees relative to each other, said apertures (6) extending along the upper portion of the shank (3), where they also reach into said abutting collar (4), thereby defining corresponding concavities (10) in the inner contour of said abutting collar (4).

4. Buffer arrangement according to one or more of the preceding claims, **characterized in that** said head (2) defines on top a shock-absorbing surface (12) constituted by a protruding, internally relieved central cap (13), provided in view of dampening light blows, and a compact outer ring (14) that is substantially supported by the annular surface of said abutting collar (4) to absorb more severe shocks, said outer ring (14) having a slightly smaller diameter than said abutting collar (4).

5. Buffer arrangement according to one or more of the preceding claims, **characterized in that** said bulges (7) protrude below said abutting collar (4) through said concavities (10) so as to come into contact with the plane of the window or door wing or the corresponding abutment member thereof, as the case may be, thereby separating said plane from the abutting collar (4), when said shank (3) is inserted in the appropriate receptacle.

6. Buffer arrangement according to one or more of the preceding claims, **characterized in that** said apertures (6) of said shank (3) are filled by elastic vertical extensions (15) of said head (2), which have substantially the same thickness as the wall of said shank (3), in which said extensions (15), following a violent shock, elastically and reversibly expand outwardly in the free space that exists, owing to the provision of said bosses (5), between the wall of said rigid shank (3) and the surface of the receptacle in which the buffer device (1) is inserted, so as to dampen the shock.

7. Buffer arrangement according to one or more of the preceding claims, **characterized in that** said head (2) and said shank (3) are moulded sequentially in the same mould, said head (2) being of a soft rubber material and said shank (3) being of a rigid plastic material.

8. Buffer arrangement according to one or more of the preceding claims, substantially as described and illustrated in and with reference to the accompanying drawings.
